# FASCICULE DE BREVET EUROPEEN

(11) **EP 3 563 494 B1**
(45) Date de publication et mention de la délivrance du brevet: **18.08.2021**
(21) Numéro de dépôt: 17821938.2
(22) Date de dépôt: 27.12.2017
(51) Int. Cl.: H04B 7/185

(54) **PROCÉDÉ ET DISPOSITIF DE RÉALLOCATION DE RESSOURCES SATELLITE**
VERFAHREN UND VORRICHTUNG ZUR ERNEUTEN ZUWEISUNG VON SATELLITENRESSOURCEN
METHOD AND DEVICE FOR REALLOCATING SATELLITE RESOURCES

(30) Priorité: 29.12.2016 FR 1601896
(43) Date de publication de la demande: 06.11.2019
(73) Titulaire: Thales, 92400 Courbevoie (FR)
(72) Inventeur: SOULIÉ, Antoine, 92622 Gennevilliers Cedex (FR); TOURET, Marc, 92622 Gennevilliers Cedex (FR)
(74) Mandataire: Marks & Clerk France
(86) Numéro de dépôt international: PCT/EP2017/084638
(87) Numéro de publication internationale: WO 2018/122258

(56) Documents cités:
- EP-A2- 2 088 691
- WO-A1-2004/095867
- WO-A1-2015/164842

## Description

L'invention concerne un procédé et un dispositif permettant de réallouer des ressources satellites dans un système de communication comportant plusieurs utilisateurs.

### ÉTAT DE L'ART ANTÉRIEUR

Le domaine des télécommunications par satellite fait notamment appel à des services sécurisés qui doivent être fournis au moyen d'échanges de flux chiffrés, tels que la phonie, le multimédia, les données. Dans ce domaine, il est important de pouvoir gérer la puissance et la modulation des signaux en fonction des flux à transmettre.

La demande de brevet FR3033469 décrit un procédé qui permet :
- D'allouer et de moduler une porteuse dont la fréquence change régulièrement,
- De changer de puissance et de modulation en tenant compte de la quantité de données à transmettre,
- D'injecter les flux et de préempter des flux de moindre priorité lorsque les données à transmettre sont trop nombreuses par rapport à la puissance de modulation disponible, et
- D'allouer des ressources sur une porteuse en fonction de la nature du service, BFT, voix sur IP VoIP, etc.

Le document WO 2004/095867 décrit une méthode pour établir une connexion radio dans un système de communication satellite dans lequel une station à distance est connectée à une station centrale à travers un réseau de satellites. L'établissement de la connexion radio comprend l'établissement d'une liste d'informations sur les ressources disponibles du réseau satellite, de la publication par la station centrale de la liste des ressources pour la station distante. La station distante identifie ensuite l'ensemble des ressources publiées pour établir la connexion radio et une mise à jour de la liste. Le procédé permet d'identifier les canaux entrants et sortants, la disponibilité du canal et la densité énergétique des canaux.

Le document WO 2015/164842, concerne un procédé pour établir une session de communications. Après une demande de réservation de session, il y a une réservation de bande passante et un contrôle d'admission.

Le document EP 2088691 décrit un système de communication par satellite, comprenant un concentrateur et une pluralité de terminaux hétérogènes. Le concentrateur peut diviser un segment de largeur de bande désigné pour un canal aller en au moins deux porteuses, certains des terminaux pouvant écouter sur une première porteuse et d'autres terminaux pouvant écouter sur au moins la deuxième porteuse et réorganiser la répartition du segment de bande passante entre les différentes porteuses.

Malgré les avantages présentés, les procédés connus de l'art antérieur ne permettent pas d'allouer des ressources sur une autre porteuse, lorsqu'une porteuse est déjà occupée par un flux pour un terminal Satcom donné. De plus, il existe encore une demande d'optimisation globale de la ressource spectrale disponible, de contrôle de trafic tout en fournissant de la qualité de service en Diffserv, et d'affectation de priorités.

Des terminaux avec des flux peu prioritaires peuvent ainsi se retrouver sur des porteuses peu utilisées et donc être servis, alors que d'autres terminaux avec des flux prioritaires se trouvent sur des porteuses congestionnées et ne sont pas servis. Les flux peu prioritaires seront bien transportés alors qu'il n'est pas certain que les flux prioritaires soient transportés et distribués à leurs destinataires.

Dans la suite de la description, le terme hub désigne le même objet que l'expression « hub satcom ».

### RÉSUMÉ DE L'INVENTION

L'invention concerne un procédé pour réallouer des ressources dans un système de communication radio satellite, ledit système comprenant un ou plusieurs terminaux utilisateurs, un site hub comprenant un hub comportant un hub manager, un hub accès, un modem source et un modem destination, un contrôleur SBC, ledit procédé comportant au moins les étapes suivantes :
- Suite à une première requête de contenu, un premier terminal utilisateur U₁ est initialement en relation avec un premier modem source du hub auquel il est accroché, afin de permettre un échange d'un premier trafic de données pour le premier utilisateur,
- Sur réception d'une nouvelle requête de communication Rq₂ émise par au moins un deuxième terminal utilisateur U2, lorsque la requête Rq₂ est prioritaire sur les requêtes en cours de traitement, alors exécuter au moins les étapes suivantes :
   - Le hub manager notifie le modem destination que ledit modem destination va assurer le trafic d'un deuxième flux de données F₂ pour une nouvelle requête émise par le deuxième terminal U₂,
   - Le hub manager indique au modem source, en charge jusque là d'assurer le trafic d'un premier flux de données F₁ pour le premier terminal U₁, de suspendre son trafic,
   - Le hub manager notifie au hub accès de rediriger alors les flux à destination du premier terminal U1 vers le modem destination,
   - Le hub manager prévient le premier terminal utilisateur U₁ de son changement d'allocation via les canaux du modem source, pour le premier flux de données F₁,
   - Le terminal utilisateur U₁ envoie un accusé de réception de la réallocation de canal,
   - Sur réception de cet accusé de réception, le hub manager libère les ressources attribuées au terminal utilisateur U1 par le modem source, et indique au modem destination que la transmission du premier flux F₁ et du deuxième flux F₂ est possible,
   - Le hub manager confirme alors au contrôleur SBC, que la demande de ressources pour un nouveau flux à destination du terminal utilisateur U2 est acceptée.

La requête de communication CAC est, par exemple, validée par un module de chiffrement/déchiffrement.

La nouvelle requête de demande de service peut être émise par un même terminal utilisateur.

Selon une variante de réalisation, sur réception de plusieurs requêtes de service, le hub manager considère les niveaux de priorité de chacune des requêtes pour réallouer les ressources. Lorsqu'une réallocation de ressource pour un premier terminal utilisateur ayant un flux prioritaire entraîne la préemption de ressources d'un deuxième terminal utilisateur ayant un flux moins prioritaire, alors le hub manager suspend temporairement la réallocation du premier terminal utilisateur et effectue une recherche de ressources pour le deuxième terminal, terminal utilisateur, sur la base des demandes de flux déjà satisfaites et lorsque le hub manager trouve des ressources le deuxième terminal utilisateur est réalloué, autrement le hub manager indique au SBC qu'il ne peut plus assurer le contrat de service pour le deuxième terminal utilisateur.

Le procédé est mis en œuvre pour des requêtes de services de type SIP et le protocole de communication est un protocole de type TDMA.

L'invention concerne aussi un dispositif permettant de réallouer des ressources satellite au sein d'un système de communication comportant un ou plusieurs terminaux utilisateurs Uk, un terminal utilisateur étant équipé d'un émetteur/récepteur et d'une unité de traitement, le dispositif comportant au moins :
- Un hub Satcom comportant au moins :
   - Un ensemble pour la transmission des données,
   - Au moins un modem émetteur/récepteur de données vers/depuis un ou plusieurs terminaux utilisateurs, ledit modem comportant :
      - Un premier modem Source configuré pour assurer le trafic vers un terminal utilisateur et via lequel les transmissions vers ce terminal utilisateur ont cours,
      - Un deuxième modem destination configuré pour prendre le relais du trafic du terminal utilisateur après une réallocation des ressources, suivant le procédé selon l'invention,
      - Un hub manager adapté à allouer/réallouer des ressources radio en fonction d'une requête de service ou une requête de trafic,
      - Une interface data externe ou hub accès, via laquelle transitent les flux en provenance ou à destination des terminaux utilisateurs,
      - Une base de données contenant les ressources satellites,
   - Une unité de traitement des requêtes de service intégrant une base de données adaptée à traduire une requête de services en requête de réservation pour un flux de données,
   - Un site hub comporte en plus du hub au moins :
      - Un équipement de chiffrement/déchiffrement des flux et de vérification de la conformité des flux, destiné à protéger lesdits flux des interceptions, l'équipement de chiffrement/déchiffrement comprend une base de données contenant des règles de sécurité, des règles de chiffrage et de conformité qui sont propres à une application,
   - Une unité de traitement des requêtes de service configuré pour recevoir une requête de services Rq provenant d'un terminal utilisateur ou d'un serveur comprenant une base de données et vérifier ladite requête avant sa transmission au hub manager.

Le dispositif peut comporter un module de chiffrement et de contrôle de conformité des demandes CAC.

### LISTE DES FIGURES

- Figure 1, un exemple de système de communication par satellite,
- Figure 2, une illustration du principe du protocole selon l'invention,
- Figure 3, une succession des étapes du procédé selon l'invention, et
- Figure 4, une variante de mise en œuvre du procédé.

### DESCRIPTION DÉTAILLÉE

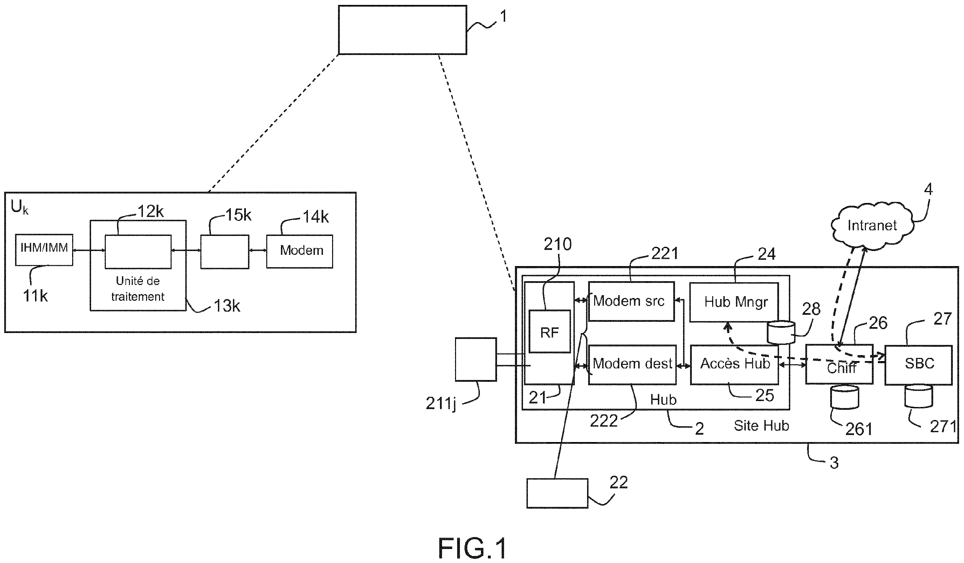

La figure 1 illustre un exemple de réseau de radiocommunication satellitaire S dans lequel peut être mis en œuvre le procédé l'invention. Le réseau est, par exemple, en topologie étoilée avec plusieurs terminaux Uk, un satellite transparent 1, un site hub 3 comprenant le hub satcom 2 et un site intranet/internet 4.

Un terminal utilisateur Uk comporte une interface externe 11k, une interface IHM par exemple, ou une interface données machine-machine. L'interface est reliée à une unité de traitement générique 13k, constituée par exemple d'une mémoire et d'un processeur adapté à exécuter les étapes du procédé selon l'invention. Le terminal utilisateur comporte un module de chiffrement/déchiffrement des flux de données et un modem 14k adapté à émettre et à recevoir des données depuis / vers le hub. Ce modem est en outre capable d'écouter la signalisation provenant du hub Satcom lui indiquant les ressources radio à utiliser. Ce modem est capable de changer de ressources lorsqu'il reçoit une demande de la part du hub Satcom.

L'unité de traitement générique 13k est équipée d'un module de gestion des requêtes 12k capable de recevoir une requête depuis l'interface externe et de la traduire en une requête de services de communications. Les requêtes peuvent être de type SIP pour Session Initiation Protocol.

Pour sa fonction modem, le terminal utilise les ressources de transmission que le hub lui aura allouées en suivant les étapes du procédé selon l'invention.

Pour sa fonction de chiffrement/déchiffrement des flux de données, le terminal utilisateur utilise une clé secrète en accord avec la fonction de chiffrement/déchiffrement au niveau du hub selon un protocole connu de l'homme du métier et qui ne sera pas détaillé car n'étant pas l'objet de l'invention.

A un instant t, chaque terminal Uk utilise, pour satisfaire ses services, une portion Bᵢ de la bande passante de transmission B du réseau de transmission pour transmettre un débit Q(Dᵢ) de données Dᵢ.

Dans le système selon l'invention, le satellite 1 joue un rôle de relais transparent et ne sera donc pas détaillé.

Le site hub 3 est en liaison avec, par exemple une station terrestre 4 fournisseur de services. La station terrestre peut être équipée d'un réseau Intranet ou Internet.

Le hub satcom 2 est le maître de l'allocation et de la réallocation des ressources. Il comprend, par exemple, plusieurs modules colocalisés :
- Un ensemble 21 comprenant un module radiofréquence RF 210 et des antennes 211j, permettant la transmission des données sur le réseau SATCOM,
- Au moins un modem 22 adapté à émettre et à recevoir des données depuis un ou plusieurs utilisateurs. Le modem comporte par exemple les éléments suivants :
   - Un premier modem Source, 221, modem du hub qui assure le trafic vers un terminal et via lequel les transmissions vers ce terminal ont cours,
   - Un deuxième modem destination 222, qui prendra le relais du trafic du terminal après une réallocation des ressources, suivant le procédé selon l'invention,
- Une unité d'allocation des ressources radio, ou module hub manager, 24, capable d'allouer/de réallouer des ressources radio (créneau temporel ou slot sur une porteuse) en fonction d'une demande de trafic, ou d'une demande de requête de service,
- Une interface data externe IP/Ethernet par exemple, ou accès hub 25, par laquelle transitent les flux en provenance ou à destination des terminaux utilisateurs,
- Une base de données 28, contenant les ressources Satcom.

Le site hub 3, comporte en plus du hub 2 au moins :
- Un équipement 26 de chiffrement/déchiffrement des flux et de vérification de la conformité des flux, destiné à protéger lesdits flux des interceptions, l'équipement de chiffrement/déchiffrement comprend une base de données 261 contenant des règles de sécurité, des règles de chiffrage et de conformité qui sont propres à une application,
- Une unité de traitement des requêtes de service, typiquement un contrôleur de session de périphérie plus connu sous le terme anglo-saxon « Session Border Controller » ou SBC, 27, capable de recevoir une requête de services Rq provenant d'un terminal utilisateur ou d'un serveur ; l'unité de traitement des requêtes comprend une base de données 271.

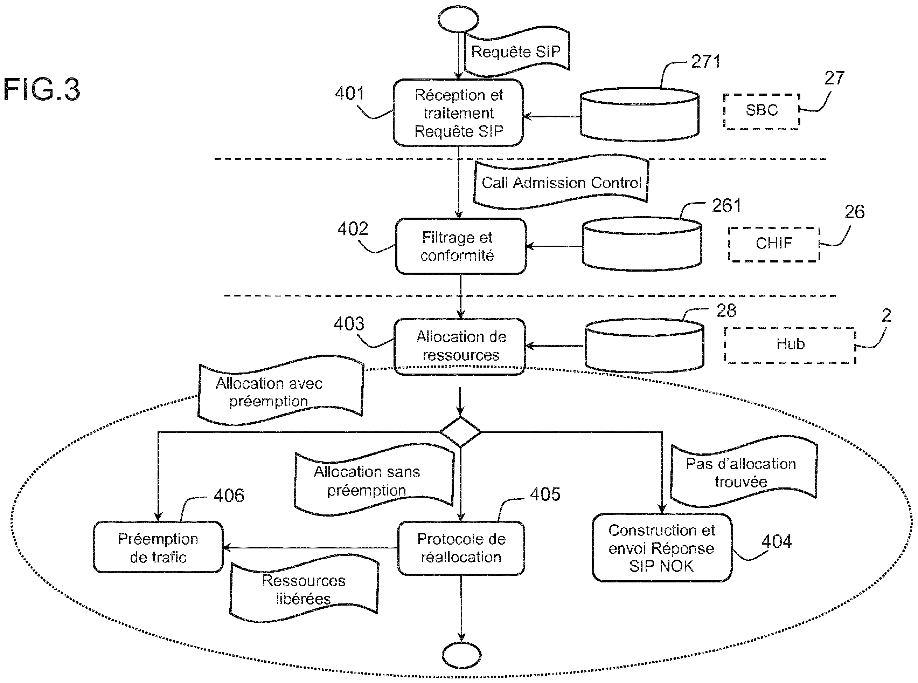

Le contrôleur SBC est un module de traduction de requête de services en requêtes de réservation pour un flux avec des paramètres de débit/latence, jigue, etc. La requête de flux (dénommée call admission control figure 3) est vérifiée par le module de sécurité (chiffreur) et transmise au hub manager.

Le contrôleur SBC comporte notamment la base de données des services supportés par le système de communication, par exemple un annuaire des services 271 permettant de savoir comment une requête de service est traduite en requête de ressources SATCOM. Par exemple, une requête pour un service de phonie pourra être traduite en une allocation d'un codeur-décodeur ou codec bas débit, donc de qualité moyenne, se contentant de quelques slots d'une trame sur une porteuse TDMA, avec un rendu de la phonie moyen. Elle pourra aussi être traduite avec un codec haut débit de haute qualité sur une trame dédiée au terminal. Le contrôleur SBC est par exemple une fonction implémentée sur un équipement télécom, typiquement une carte de traitement ou processing avec des interfaces externes de type Ethernet.

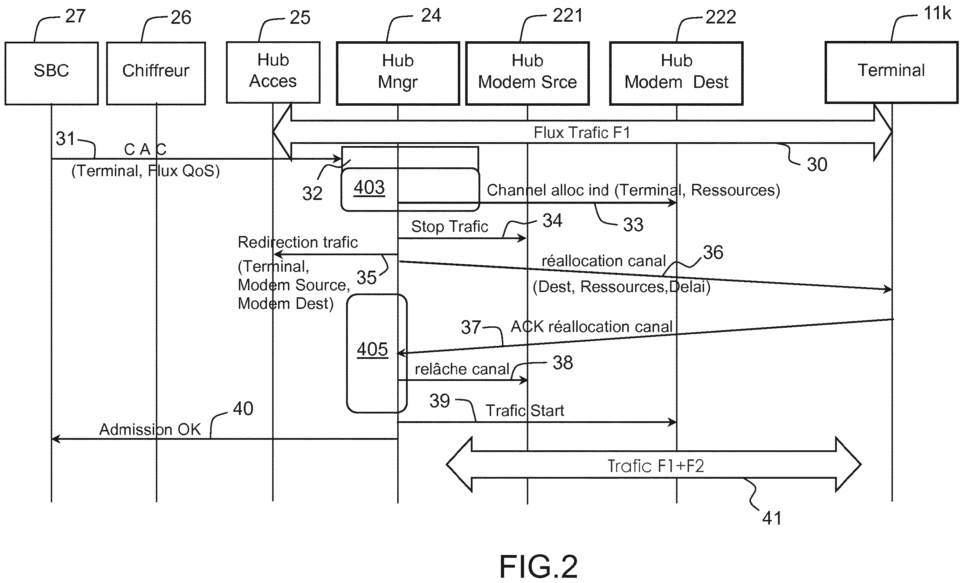

La figure 2 illustre le fonctionnement du principe du protocole de réallocation de ressources selon l'invention.

Suite à une première requête de contenu, le terminal utilisateur U₁ est initialement en relation avec le premier modem source du hub auquel il est « accroché », i.e., mis en communication, pour un échange de trafic 30, i.e., par exemple la transmission des données fournies par le service Internet vers l'utilisateur en fonction du contenu de sa requête sur un premier canal de communication CH₁.

Sur la figure 2 le trafic de flux de données en cours, 30, entre un ou plusieurs terminaux et l'accès au hub est représenté. L'exemple est donné pour un terminal qui a une première requête en cours d'exécution avec échange d'un premier flux F₁ et qui va émettre une deuxième requête Rq₂ qui est prioritaire par rapport à la requête Rq₁. Un terminal est en communication avec un et un seul modem du hub à chaque instant.

L'unité d'allocation des ressources radio ou hub manager 24 connaît l'ensemble des terminaux qu'il gère. Les terminaux sont pris en charge par les différents modems du hub. Lorsqu'un modem du hub n'a pas de trafic avec un terminal, il n'a pas de raison de le connaître. De ce fait, lorsqu'il y a réallocation de ressources d'un terminal et que les ressources initiales et les ressources finales ne sont pas gérées par le même modem du hub, le modem source qui gérait les ressources initiales peut oublier l'identité du terminal qu'il gérait, alors que le modem destination apprend l'arrivée d'un terminal qu'il ne gérait pas auparavant.

Dans une première étape, 31, le contrôleur SBC envoie une requête de contrôle d'admission d'appel ou CAC pour un terminal donné U₁, connu du hub, pour lequel le terminal ou un service réseau requiert une nouvelle requête de service Rq₂. La requête CAC est transmise via le module de chiffrement/déchiffrement du site hub qui joue ici un rôle de valideur de la validité/conformité de la requête vers le hub manager. L'information contenue dans la requête est l'identité du terminal utilisateur concerné.

Dans une deuxième étape, 32, le procédé exécute le procédé de réallocation de ressources. Le hub manager 24 tient compte des flux de données en cours et de la nouvelle requête Rq₂ pour procéder à la réallocation de ressources si la nouvelle requête Rq₂ est prioritaire par rapport aux requêtes précédentes, dans cet exemple par rapport à la première requête Rq₁. La réallocation illustrée sur la figure 2 a lieu sur un autre modem, le modem de destination.

Lors d'une troisième étape, 33, le hub manager 24 notifie au modem destination que ce dernier va assurer le trafic pour une nouvelle requête Rq₂ pour le terminal, message Channel alloc ind(Terminal, Resources).

Lors d'une quatrième étape, 34, le hub manager 24 indique au modem source 221, en charge jusque là d'assurer le trafic du flux F₁ (requête Rq₁) pour le terminal U₁, de suspendre son trafic, i.e. message STOP qui indique de ne plus transmettre de données, tant dans le sens terminal vers le modem source 221, qu'inversement du modem source 221 vers le terminal.

Lors d'une cinquième étape 35, le hub manager 24 notifie au accès hub 25 de rediriger alors les flux F₁ à destination du terminal vers le modem destination. L'ensemble des deux flux F₁ et F₂ correspondant aux deux requêtes Rq₁ et Rq₂ sera redirigé vers le modem destination.

Lors d'une sixième étape, 36, le hub manager 24 prévient le terminal U₁ de son changement d'allocation de ressources via les canaux du modem source.

Lors d'une septième étape, 37, le terminal U₁ envoie un accusé de réception de la réallocation de canal. Le message d'accusé de réception ACKrealloc est émis par le modem du terminal U₁ et reçu par le modem source, et transmis au hub Manager qui contrôle le protocole de réallocation.

Sur réception de cet accusé de réception, lors d'une huitième étape, 38, le hub manager 24 libère les ressources attribuées au terminal U₁ par le modem source, afin de satisfaire la deuxième requête Rq₂.

Lors d'une neuvième étape, 39, le hub manager 24 indique au modem destination que le trafic F₁ pour le terminal peut reprendre en utilisant les ressources de ce modem.

Lors d'une dixième étape, 40, le hub manager 24 confirme alors au contrôleur SBC, que la demande de ressources pour la transmission d'un nouveau flux F₂ à destination du terminal est acceptée. La transmission des flux de données F₁ et F₂ vers le terminal est réalisée, elle contient les données correspondant à la première requête et les données correspondant à la deuxième requête.

La décision de réallouer des ressources peut être prise par le module hub manager suite à la réception d'une requête de ressources par un utilisateur pour du trafic additionnel, ou suite à la réception d'une notification de fin de session pour un trafic précédent ou encore, suite à la libération de ressources précédemment utilisées par d'autres terminaux. Lorsqu'un terminal utilisateur Uₖ émet une deuxième requête Rq₂, dont le contenu est prioritaire par rapport à une première requête Rq₁ que le terminal avait précédemment émis, alors le hub manager va déclencher un processus de réallocation de ressources. Pour cela, le hub manager 24 indique, via le message Channel Alloc Ind, au modem Destination qu'il va y avoir une réallocation de canal. Le message Channel Alloc Ind spécifie au modem Dest, les ressources radio qui sont désormais attribuées à un terminal donné (Channell Alloc Ind(Terminal, Resources)).

Selon une autre variante de réalisation, dans le cas où la réception d'une requête de contrôle d'admission d'appel ou CAC pour un deuxième flux F₂ se traduit par l'allocation de ressources complémentaires sur le même modem que celui que traite le premier flux F₁, alors certaines des étapes exposées précédemment ne sont plus exécutées :
- Dans une première étape, 31, le contrôleur SBC envoie une requête de contrôle d'admission d'appel ou CAC pour un terminal donné U₁, connu du hub, pour lequel l'utilisateur ou un service réseau requiert une nouvelle requête de communication Rq₂. La requête CAC est transmise via le module de chiffrement/déchiffrement du site hub qui joue ici un rôle de valideur de la validité/conformité de la requête vers le hub manager. L'information contenue dans la requête est notamment l'identité du terminal utilisateur concerné.
- Dans une deuxième étape, 32, le procédé exécute le procédé de réallocation de ressources. Le hub manager 24 tient compte des flux de données en cours et de la nouvelle requête Rq₂ pour procéder à la réallocation de ressources lorsque la nouvelle requête Rq₂ est prioritaire par rapport aux requêtes précédentes Rq₁.

- Lors d'une troisième étape, 43, le hub manager 24 notifie le modem source 221 qu'il va assurer le trafic pour une nouvelle requête, message Channel alloc ind(Terminal, Resources), en utilisant une partie des ressources correspondant au delta de ressources complémentaires que le modem source 221 doit gérer pour le terminal, le trafic continue sur le même modem. Le trafic F₁ continue sur le même modem.
- Lors d'une quatrième étape, 44, le hub manager 24 prévient le terminal U₁ de son changement d'allocation via les canaux du modem source, le terminal envoie un accusé de réception de la réallocation de canal. Le message d'accusé de réception ACKrealloc est émis par le modem du terminal U₁ et reçu par le modem source et transmis au hub Manager qui contrôle le protocole de réallocation, avec uniquement les ressources complémentaires que le terminal devra utiliser, pour satisfaire la deuxième requête.
- Lors d'une cinquième étape, 45, le hub manager 24 confirme alors au contrôleur SBC que la demande de ressources pour un nouveau flux F₂ à destination du terminal est acceptée. La transmission des flux de données vers le terminal est réalisée, elle contient les données correspondant à la première requête et les données correspondant à la deuxième requête.
- Lors d'une sixième étape, 46, le hub manager confirme alors au contrôleur SBC que la demande de ressources pour un nouveau flux F₂ est acceptée.

L'exemple a été donné avec un terminal utilisateur qui émet une nouvelle requête. Sans sortir du cadre de l'invention, cette description peut être étendue pour une application avec plusieurs utilisateurs qui émettent des nouvelles requêtes. Dans ce cas, le hub manager va gérer les priorités des requêtes pour déterminer l'ordre de traitement des requêtes et la réallocation des ressources.

Les requêtes de réallocation de différents terminaux sont traitées de manières consécutives afin que la base de données des ressources disponibles 28 soit à jour lors de la recherche d'une nouvelle allocation. Si une réallocation de ressource pour un premier terminal ayant un flux prioritaire entraîne la préemption de ressources d'un deuxième terminal ayant un flux moins prioritaire, alors le procédé cherche néanmoins à conserver le flux pour le deuxième terminal. Pour conserver le flux de ce deuxième terminal, le hub manager suspend temporairement la réallocation du premier terminal et effectue une recherche de ressources SATCOM pour le deuxième terminal, sur la base des demandes de flux déjà satisfaites. Soit le hub manager trouve des ressources autres aptes à satisfaire complétement ou partiellement ces demandes, auquel cas le deuxième terminal est réalloué, soit le hub manager ne trouve pas ces ressources, auquel cas le hub manager indique au SBC qu'il ne peut plus assurer le contrat de service pour le deuxième terminal. A l'issue du traitement de réallocation de ce deuxième terminal, le hub manager procède à la réallocation du premier terminal.

La figure 3 illustre un exemple d'étapes mettant en œuvre la variante de procédé exposée précédemment à la figure 2. Au niveau du contrôleur SBC, la requête d'ouverture de session SIP émise par un utilisateur UE₁ est traduite en requête de réservation de ressources Rq, 401, en utilisant des informations contenues dans une base de données service 271. La base de données de services peut comporter une ou plusieurs classes de services avec leurs attributs, le débit, la latence, la qualité de service QoS liée à la classe de services.

Le boîtier de chiffrement et de vérification de la conformité 402 reçoit cette requête Rq et vérifie sa conformité en fonction des règles de sécurité, les règles étant disponibles dans une base de données 261. La requête Rq vérifiée est ensuite transmise, 403, à un module d'allocation de ressources qui est en liaison avec une base de données 28 comprenant l'ensemble des ressources Satcom disponibles.

L'allocation de ressources 403 est détaillée dans la bulle sur la figure 3, le traitement de la requête est exécutée au niveau du hub :
a) si aucune allocation de ressources n'est possible, 404, alors le hub manager 24 renvoie à l'utilisateur une information indiquant qu'il est impossible de satisfaire sa requête SIP,
b) si l'allocation de ressources est possible, 405, sans devoir interrompre une communication en cours, alors le hub manager 24 demande la redirection ou réallocation de la ressource à l'accès hub 25 et alloue la ressource à l'utilisateur qui a émis la requête,
c) si l'allocation de ressources est possible, 406, mais en devant interrompre une communication, alors l'unité d'allocation des ressources ou hub manager demande la réallocation des flux à l'accès hub 25. Le hub manager va préempter le trafic, interrompre le transfert du flux de données, avertir l'utilisateur que le canal sur lequel il échangeait des données pour la première requête n'est plus disponible et éventuellement réallouer un deuxième canal de communication, puis ensuite allouer pour la requête prioritaire le premier canal de transmission et les ressources nécessaires au transfert du flux de données.

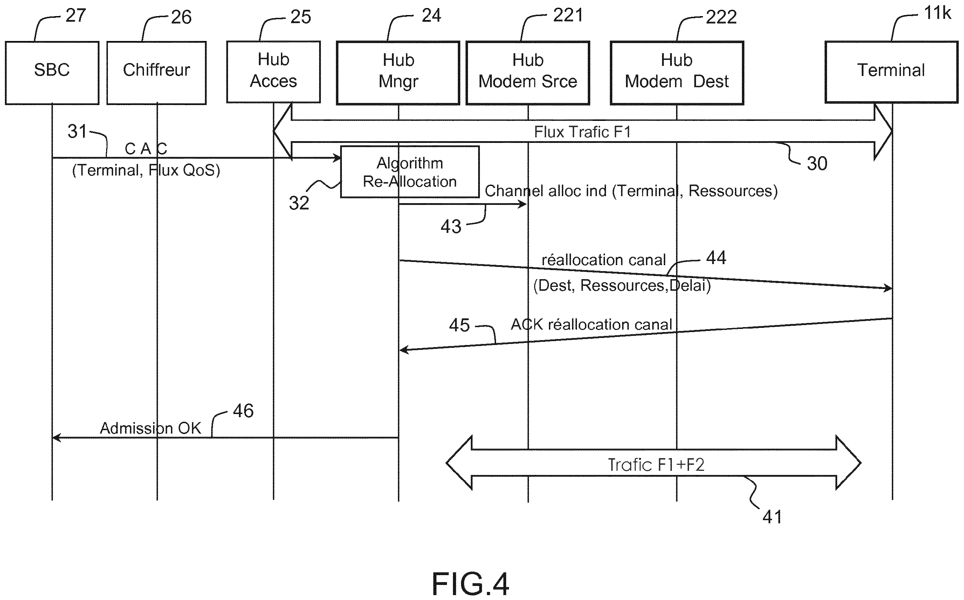

Dans cet exemple, l'accès hub reste présent car il traite le flux F₁ en entrée et le dirige vers un autre hub. Dans le cas de l'exemple donné à la figure 4, il n'y a pas de redirection de flux, l'accès hub n'intervient pas car le flux reste traité par le hub modem source.

Selon une variante de mise en œuvre, le procédé lors d'une allocation/réallocation de flux peut changer la nature des ressources attribuées, par exemple, passer du SCPC au TDMA. Par exemple dans le cas d'une deuxième requête demandant l'utilisation d'un service haut débit et/ou faible latence, alors qu'un premier flux de données F₁ est traité par un service bas débit, le procédé va sur activation de la deuxième requête, transmission du flux F₂ correspondant à cette deuxième requête, attribuer un canal pour la transmission du deuxième flux F₂ et aussi des premiers flux F₁, pour satisfaire l'exigence de haut débit et/ou faible latence exigés pour la transmission du deuxième flux F₂. A la fin de la transmission du deuxième flux F₂, le procédé va relâcher le service haut débit et/ou faible latence et reprendre le service bas débit suffisant pour transmettre le premier flux F₁.

Un exemple est donné ci-après pour le service SCPC et TDMA.

Un premier service de données BFT utilise des slots TDMA pour véhiculer des positions à intervalle régulier.

Si un deuxième service vidéo est activé, un canal SCPC sera attribué pour ce service Vidéo. Ce canal sera aussi utilisé pour véhiculer les données BFT. Les slots TDMAs utilisés avant établissement de ce service sont alors libérés lors du démarrage du service. A la fin de la session vidéo, le canal SCPC est libéré et les données BFT se voient attribuer un ou plusieurs slots TDMA, qui peuvent être distincts des slots utilisés avant la session vidéo.

Les données d'entrée pour l'algorithme de réallocation de ressources sont générées par le contrôleur SBC à partir d'une demande de service émise par un terminal utilisateur et sont utilisées par l'unité d'allocation des ressources ou hub manager 24.

Dans le cas d'une application mettant en œuvre le protocole TDMA et le protocole SCPC, les données d'entrée comportent:
- Des paramètres de la requête Rq
   - Débit min(Mb/s) et/ou débit moyen(Mb/s) garanti demandé pour chaque direction,
   - Latence demandée X x 100 ms,
   - Précédence (0 à 3) ;
- Des ressources SatCom
   - Porteuses SCPC disponibles et allouées,
   - Porteuses TDMA disponibles et slots alloués.

Les étapes mises en œuvre sont les suivantes :

### Choix du type de porteuse conditionné par la latence:

- Si la latence demandée au niveau du service requis dans une requête est inférieure à la durée du créneau temporel ou slot, alors l'allocation SCPC est prioritaire; le slot est un slot TDMA d'une trame sur une porteuse. Typiquement, la durée d'un slot est de 40ms, la trame est constituée de 18 slots. Si la latence attendue est inférieure à 40 ms, il faut dans ce cas allouer tous les slots pour un seul terminal, ce qui revient à allouer une porteuse complète pour le canal de communication entre le terminal et le hub, d'où la dénomination Single Channel per Carrier,
- Si la latence demandée est supérieure à la durée du slot, alors l'allocation TDMA est prioritaire.

### Allocation TDMA prioritaire

- Nb_slots_demandés = Débit min / débit slot,
- Espace_slots_max = latence_demandée - durée-slot,
- Nouvelle allocation de Porteuses et Slots voie montante UL et voie descendante DL pour la requête= fonction_Allocation (Nb_slots_ddés, espace_slot_max, précédence du trafic, allocation courante des ressources, sessions en cours pour le terminal),
- Si la nouvelle allocation ne retourne rien alors la réponse est négative, il n'y a pas de réallocation,
- Si la nouvelle allocation est conforme à la requête protocole de réallocation et la réponse positive, alors le hub procède à la réallocation des ressources et à la redirection du trafic, selon les figures 3 et 4.

### Allocation SCPC prioritaire

- Si le débit garanti est inférieur au débit minimum garanti par la porteuse,
- Nouvelle allocation de porteuse = fonction_Allocation (précédence du trafic, débit cible, sessions en cours).

Lors de l'arrivée d'une requête de call admission control pour un nouveau flux, il peut exister des ressources radio déjà réservées pour d'autres flux en provenance/à destination du même terminal. En cas de réallocation, les ressources de ces flux doivent également être déplacées, de façon à ce qu'un terminal ait toutes ses ressources sur la même porteuse.

## Revendications

1. Procédé pour réallouer des ressources dans un système de communication radio satellite, ledit système comprenant un ou plusieurs terminaux utilisateurs, un site hub (3) comprenant un hub (2) comportant un hub manager (24), un hub accès (25), un modem source (221) et un modem destination (222), un contrôleur SBC (27), ledit procédé comprenant au moins les étapes suivantes :
• Suite à une première requête de contenu, un premier terminal utilisateur U₁ est initialement en relation avec un premier modem source du hub auquel il est accroché, afin de permettre un échange d'un premier trafic de données pour le premier terminal utilisateur U1,
• Sur réception d'une nouvelle requête de communication Rq₂ émise par au moins un deuxième terminal utilisateur U2, lorsque la requête Rq₂ est prioritaire sur les requêtes en cours de traitement, alors exécuter au moins les étapes suivantes :
• Le hub manager (24) notifie le modem destination que ledit modem destination va assurer le trafic d'un deuxième flux de données F₂ pour une nouvelle requête émise par le deuxième terminal utilisateur U₂, (33),
• Le hub manager (24) indique au modem source (221), en charge jusque là d'assurer le trafic pour le premier terminal utilisateur U₁, de suspendre son trafic,
• Le hub manager (24) notifie au hub accès (25) de rediriger alors les flux à destination du terminal utilisateur U1 vers le modem destination,
• Le hub manager (24) prévient le terminal utilisateur U₁ de son changement d'allocation via les canaux du modem source, pour le premier flux de données F₁,
• Le terminal utilisateur U₁ envoie un accusé de réception de la réallocation de canal,
• Sur réception de cet accusé de réception, le hub manager (24) libère les ressources attribuées au terminal utilisateur U1 par le modem source, et indique au modem destination que la transmission du premier flux F₁ et du deuxième flux F₂ est possible,
• Le hub manager (24) confirme alors au contrôleur SBC (27), que la demande de ressources pour un nouveau flux à destination du terminal utilisateur U2 est acceptée.

2. Procédé selon la revendication 1 **caractérisé en ce que** la requête CAC est validée par un module de chiffrement/déchiffrement.

3. Procédé selon la revendication 1 **caractérisé en ce que** la nouvelle requête de demande de service est émise par un même terminal.

4. Procédé selon la revendication 1 **caractérisé en ce que** sur réception de plusieurs requêtes de service, le hub manager considère les niveaux de priorité de chacune des requêtes pour réallouer les ressources.

5. Procédé selon la revendication 4 **caractérisé en ce que** lorsqu'une réallocation de ressource pour un premier terminal utilisateur ayant un flux prioritaire entraîne la préemption de ressources d'un deuxième terminal utilisateur ayant un flux moins prioritaire, alors le hub manager suspend temporairement la réallocation du premier terminal utilisateur et effectue une recherche de ressources pour le deuxième terminal utilisateur, sur la base des demandes de flux déjà satisfaites et lorsque le hub manager trouve des ressources le deuxième terminal utilisateur est réalloué, autrement le hub manager indique au SBC qu'il ne peut plus assurer le contrat de service pour le deuxième terminal utilisateur.

6. Procédé selon l'une des revendications 1 à 5 **caractérisé en ce qu'**il comporte les étapes suivantes :
• Un premier service de communication est utilisé pour véhiculer un premier flux de données F₁, avec un bas débit,
• Sur réception de la requête Rq₂, pour la transmission d'un deuxième flux de données F₂ nécessitant un haut débit et/ou une faible latence, on attribue un deuxième service de communication pour véhiculer le deuxième flux, les deux flux F₁ et F₂ sont transmis en utilisant ce deuxième service de communication,
• A la fin de la transmission du deuxième flux F₂, le premier service de communication est libéré et le flux de données est transmis par le premier service de communication.

7. Procédé selon la revendication 6 **caractérisé en ce qu'**il comporte les étapes suivantes :
• Un premier service de données BFT utilise des slots TDMA pour véhiculer des positions à intervalle régulier,
• Lorsqu'un deuxième service vidéo est activé, un canal SCPC est attribué pour ce service Vidéo et pour véhiculer les données BFT,
• Les slots TDMAs utilisés avant établissement de ce service sont libérés lors du démarrage du service,
• A la fin de la session vidéo, le canal SCPC est libéré et les données BFT se voient attribuer un ou plusieurs slots TDMA.

8. Procédé selon l'une des revendications 1 à 5 **caractérisé en ce que** les requêtes de services sont de type SIP et le protocole de communication est un protocole de type TDMA.

9. Dispositif permettant de réallouer des ressources satellite au sein d'un système de communication comportant un ou plusieurs terminaux utilisateurs Uk, un terminal utilisateur étant équipé d'un émetteur/récepteur (14k) et d'une unité de traitement (13k), le dispositif comportant au moins :
• Un hub Satcom (2) comportant au moins :
• Un ensemble (21) pour la transmission des données,
• Au moins un modem (22) émetteur/récepteur de données vers/depuis un ou plusieurs terminaux utilisateurs, ledit modem comportant :
• Un premier modem Source, (221) configuré pour assurer le trafic vers un terminal utilisateur et via lequel les transmissions vers ce termina utilisateur ont cours,
• Un deuxième modem destination (222) configuré pour prendre le relais du trafic du terminal utilisateur après une réallocation des ressources, suivant le procédé selon l'une des revendications 1 à 8,
• Un hub manager (24) adapté à allouer/réallouer des ressources radio en fonction d'une requête de service ou une requête de trafic,
• Une interface data externe ou hub accès (25), via laquelle transitent les flux en provenance ou à destination des terminaux utilisateurs,
• une base de données (28) contenant les ressources satellites,
• Une unité de traitement des requêtes de service (27) intégrant une base de données (271) adaptée à traduire une requête de services en requête de réservation pour un flux de données,
• Un site hub (3) comportant en plus du hub Satcom (2) au moins :
• Un équipement (26) de chiffrement/déchiffrement des flux et de vérification de la conformité des flux, destiné à protéger lesdits flux des interceptions, l'équipement de chiffrement/déchiffrement comprenant une base de données (261) contenant des règles de sécurité, des règles de chiffrage et de conformité qui sont propres à une application,
• Une unité de traitement des requêtes de service (27) configurée pour recevoir une requête de services Rq provenant d'un terminal utilisateur ou d'un serveur comprenant une base de données (271) et vérifier ladite requête avant sa transmission au hub manager (24).

10. Dispositif selon la revendication 9 **caractérisé en ce qu'**il comporte un module (26) de chiffrement et de contrôle de conformité des demandes CAC.

## Patentansprüche

1. Verfahren zur Neuzuweisung von Ressourcen in einem Satellitenfunk-Kommunikationssystem, wobei das System Folgendes umfasst: ein oder mehrere Benutzerendgeräte, einen Hub-Standort (3), der einen Hub (2) mit einem Hub-Manager (24) umfasst, einen Zugangs-Hub (25), ein Quellmodem (221) und ein Zielmodem (222) und eine SBC-Steuerung (27), wobei das Verfahren mindestens die folgenden Schritte umfasst:
• nach einer ersten Inhaltsanforderung steht ein erstes Benutzerendgerät U₁ zunächst in Verbindung mit einem ersten Quellmodem des Hubs, an das es angeschlossen ist, um einen Austausch eines ersten Datenverkehrs für das erste Benutzerendgerät U1 zu ermöglichen,
• Durchführen, nach Empfang einer von mindestens einem zweiten Benutzerendgerät U2 ausgegebenen neuen Kommunikationsanforderung Rq₂, wenn die Anforderung Rq₂ Priorität gegenüber den in Bearbeitung befindlichen Anforderungen hat, mindestens der folgenden Schritte:
• der Hub-Manager (24) benachrichtigt das Zielmodem, dass das Zielmodem den Verkehr eines zweiten Datenstroms F₂ für eine neue Anforderung, die von dem zweiten Benutzerendgerät U₂ (33) ausgegeben wurde, gewährleisten wird,
• der Hubmanager (24) weist das bis dahin für die Gewährleistung des Verkehrs für das erste Benutzerendgerät U₁ zuständige Quellmodem (221) an, seinen Verkehr zu unterbrechen,
• der Hub-Manager (24) benachrichtigt den Zugangs-Hub (25), die an das Benutzerendgerät U1 gerichteten Ströme zum Zielmodem umzuleiten,
• der Hub-Manager (24) informiert das Benutzerendgerät U₁ über seine Zuweisungsänderung über die Kanäle des Quellmodems für den ersten Datenfluss F₁,
• das Benutzerendgerät U₁ sendet eine Empfangsbestätigung der Kanalneuzuweisung,
• nach Erhalt dieser Empfangsbestätigung gibt der Hub-Manager (24) die vom Quellmodem dem Benutzerendgerät U1 zugewiesenen Ressourcen frei und zeigt dem Zielmodem an, dass die Übertragung des ersten Datenstroms F₁ und des zweiten Datenstroms F₂ möglich ist,
• der Hub-Manager (24) bestätigt dann der SBC-Steuerung (27), dass die Ressourcenanforderung für einen neuen Fluss zum Benutzerendgerät U2 akzeptiert wird.

2. Verfahren nach Anspruch 1, **dadurch gekennzeichnet, dass** die CAC-Anforderung durch ein Ver-/Entschlüsselungsmodul validiert wird.

3. Verfahren nach Anspruch 1, **dadurch gekennzeichnet, dass** die neue Dienstanforderung von demselben Endgerät ausgegeben wird.

4. Verfahren nach Anspruch 1, **dadurch gekennzeichnet, dass** der Hub-Manager nach Empfang einer Mehrzahl von Dienstanforderungen die Prioritätsstufen jeder der Anforderungen zum Neuzuweisen der Ressourcen berücksichtigt.

5. Verfahren nach Anspruch 4, **dadurch gekennzeichnet, dass**, wenn eine Ressourcenneuzuweisung für ein erstes Benutzerendgerät mit einem Prioritätsfluss zur Präemption von Ressourcen eines zweiten Benutzerendgeräts mit einem Fluss einer niedrigeren Priorität führt, der Hub-Manager die Neuzuweisung des ersten Benutzerendgeräts vorübergehend unterbricht und eine Ressourcensuche für das zweite Benutzerendgerät auf der Basis von bereits erfüllten Flussanforderungen durchführt, und wenn der Hub-Manager Ressourcen findet, das zweite Benutzerendgerät neu zugewiesen wird, andernfalls zeigt der Hub-Manager dem SBC an, dass er den Servicevertrag für das zweite Benutzerendgerät nicht mehr gewährleisten kann.

6. Verfahren nach einem der Ansprüche 1 bis 5, **dadurch gekennzeichnet, dass** es die folgenden Schritte umfasst:
• Benutzen eines ersten Kommunikationsdienstes, um einen ersten Datenstrom F₁ mit einer niedrigen Rate zu übertragen,
• Zuweisen, nach Empfang der Anforderung Rq₂, für die Übertragung eines zweiten Datenstroms F₂, der eine hohe Rate und/oder eine geringe Latenz erfordert, eines zweiten Kommunikationsdienstes zum Transportieren des zweiten Stroms, und die beiden Ströme F₁ und F₂ unter Nutzung dieses zweiten Kommunikationsdienstes übertragen werden,
• Freigeben, am Ende der Übertragung des zweiten Datenstroms F₂, des ersten Kommunikationsdienstes und Übertragen des Datenstroms durch den ersten Kommunikationsdienst.

7. Verfahren nach Anspruch 6, **dadurch gekennzeichnet, dass** es die folgenden Schritte umfasst:
• ein erster BFT-Datendienst benutzt TDMA-Slots zum Transportieren von Positionen in regelmäßigen Abständen,
• wenn ein zweiter Videodienst aktiviert wird, wird ein SCPC-Kanal für diesen Videodienst und für den Transport der BFT-Daten zugewiesen,
• die vor dem Einrichten dieses Dienstes benutzten TDMA-Slots werden zu Beginn des Dienstes freigegeben,
• am Ende der Videositzung wird der SCPC-Kanal freigegeben und den BFT-Daten werden ein oder mehrere TDMA-Slots zugewiesen.

8. Verfahren nach einem der Ansprüche 1 bis 5, **dadurch gekennzeichnet, dass** die Dienstanforderungen vom Typ SIP sind und das Kommunikationsprotokoll ein Protokoll vom Typ TDMA ist.

9. Gerät zum Ermöglichen einer Neuzuweisung von Satellitenressourcen innerhalb eines Kommunikationssystems mit einem oder mehreren Benutzerendgeräten Uk, wobei ein Benutzerendgerät mit einem Sender/Empfänger (14k) und einer Verarbeitungseinheit (13k) ausgestattet ist, wobei das Gerät mindestens Folgendes umfasst:
• einen Satcom-Hub (2), der mindestens Folgendes umfasst:
• eine Baugruppe (21) zur Datenübertragung,
• mindestens ein Modem (22) zum Senden/Empfangen von Daten zu/von einem oder mehreren Benutzerendgeräten, wobei das Modem Folgendes umfasst:
▪ ein erstes Quellmodem (221), konfiguriert zum Gewährleisten des Verkehrs zu einem Benutzerendgerät, und über das die Übertragungen zu diesem Benutzerendgerät erfolgen,
▪ ein zweites Zielmodem (222), konfiguriert zum Übernehmen des Verkehrs vom Benutzerendgerät nach einer Neuzuweisung von Ressourcen gemäß dem Verfahren nach einem der Ansprüche 1 bis 8,
• einen Hub-Manager (24), ausgelegt zum Zuweisen/Neuzuweisen von Funkressourcen je nach einer Dienstanforderung oder einer Verkehrsanforderung,
• eine externe Datenschnittstelle oder einen Zugangs-Hub (25), über den Datenströme von oder zu Benutzerendgeräten geleitet werden,
• eine Datenbank (28), die die Satellitenressourcen enthält,
• eine Dienstanforderungsverarbeitungseinheit (27), die eine Datenbank (271) enthält, ausgelegt zum Übersetzen einer Dienstanforderung in eine Reservierungsanforderung für einen Datenstrom,
• einen Standort-Hub (3), der zusätzlich zum Satcom-Hub (2) mindestens Folgendes umfasst:
o eine Ausrüstung (26) zum Ver-/Entschlüsseln von Strömen und zum Überprüfen der Konformität der Ströme, die zum Schützen der Ströme vor dem Abfangen dient, wobei die Ver-/Entschlüsselungsausrüstung eine Datenbank (261) umfasst, die für eine Anwendung spezifische Sicherheits-, Verschlüsselungs- und Konformitätsregeln enthält,
• eine Dienstanforderungsverarbeitungseinheit (27), konfiguriert zum Empfangen einer Dienstanforderung Rq von einem Benutzerendgerät oder einem eine Datenbank (271) umfassenden Server und zum Verifizieren der Anforderung vor ihrer Übertragung zum Hub-Manager (24).

10. Gerät nach Anspruch 9, **dadurch gekennzeichnet, dass** es ein Modul (26) zum Verschlüsseln und Überprüfen der Konformität von CAC-Anfragen umfasst.

## Claims

1. A method for reallocating resources in a satellite radio communication system, said system comprising one or more user terminals, a hub site (3) comprising a hub (2) with a hub manager (24), an access hub (25), a source modem (221) and a receiver modem (222), and an SBC controller (27), said method comprising at least the following steps:
• further to a first content request, a first user terminal U₁ is initially in relation with a first source modem of the hub at which he is connected, so as to allow an exchange of a first data traffic for the first user terminal U1,
• upon receipt of a new communication request Rq₂ sent by at least a second user terminal U2, when the request Rq₂ takes priority over the requests currently being processed, then executing at least the following steps:
• the hub manager (24) notifies the receiver modem that said receiver modem will handle the traffic of a second data flow F₂ for a new request sent by the second user terminal U₂, (33),
• the hub manager (24) tells the source modem (221), responsible up until this point for handling the traffic for the first terminal U₁, to suspend its traffic,
• the hub manager (24) notifies the access hub (25) to then redirect the flows destined for the user terminal U1 to the receiver modem,
• the hub manager (24) informs the user terminal U₁ of its change of allocation via the channels of the source modem, for the first data flow F₁,
• the user terminal U₁ sends an acknowledgement of receipt of the channel reallocation,
• upon receipt of this acknowledgment of receipt, the hub manager (24) frees up the resources assigned to the user terminal U₁ by the source modem, and tells the receiver modem that it is possible to transmit the first flow F₁ and the second flow F₂,
• the hub manager (24) then confirms to the SBC controller (27) that the demand for resources for a new flow destined for the user terminal U₂ is accepted.

2. The method according to claim 1, **characterized in that** the CAC request is validated by an encryption/decryption module.

3. The method according to claim 1, **characterized in that** the new service demand request is sent by one and the same terminal.

4. The method according to claim 1, **characterized in that**, upon receipt of a plurality of service requests, the hub manager considers the priority levels of each of the requests in order to reallocate the resources.

5. The method according to claim 4, **characterized in that**, when a reallocation of a resource for a first user terminal having a priority flow leads to pre-empting of resources of a second user terminal having a lower-priority flow, then the hub manager temporarily suspends the reallocation of the first user terminal and performs a search for resources for the second user terminal on the basis of the flow demands that have already been met, and when the hub manager finds resources, the second user terminal is reallocated, otherwise the hub manager tells the SBC that it is no longer able to provide the service contract for the second user terminal.

6. The method according to one of claims 1 to 5, **characterized in that** it comprises the following steps:
• a first communication service is used to convey a first data flow F₁, with a low throughput,
• upon receipt of the request Rq₂, in order to transmit a second data flow F₂ requiring a high throughput and/or a low latency, a second communication service is assigned to convey the second flow, and the two flows F₁ and F₂ are transmitted using this second communication service,
• at the end of the transmission of the second flow F₂, the first communication service is freed up and the data flow is transmitted by the first communication service.

7. The method according to claim 6, **characterized in that** it comprises the following steps:
• a first BFT data service uses TDMA slots to convey positions at regular intervals,
• when a second video service is activated, an SCPC channel is assigned for this video service and to convey the BFT data,
• the TDMA slots that are used before this service is set up are freed up when the service begins,
• at the end of the video session, the SCPC channel is freed up and the BFT data are assigned one or more TDMA slots.

8. The method according to one of claims 1 to 5, **characterized in that** the service requests are of SIP type, and the communication protocol is a TDMA protocol.

9. A device allowing reallocation of satellite resources within a communication system having one or more user terminals Uk, one user terminal being equipped with a transceiver (14k) and with a processing unit (13k), wherein the device comprises at least:
• a satcom hub (2) comprising at least:
• an assembly (21) for data transmission,
• at least one modem (22) for sending/receiving data to/from one or more user terminals, said modem comprising:
■ a first source modem (221) configured to assure the traffic to a user terminal and via which the transmissions to the user terminal take place,
■ a second receiver modem (222) configured to take over the traffic of the user terminal following a reallocation of the resources according to the method according to one of claims 1 to 8,
• a hub manager (24) designed to allocate/reallocate radio resources depending on a service request or a traffic request,
• an external data interface or access hub (25), via which the flows originating from or destined to the user terminals transit,
• a database (28) containing the satellite resources,
• a service request processing unit (27), incorporating a database (271) and designed to translate a service request into a reservation request for a data flow,
• a hub site (3) comprising, further to the Satcom hub (2), at least:
o a device (26) for encrypting/decrypting the flows and for verifying the conformity of the flows and intended to protect said flows from being intercepted, the encryption/decryption device comprising a database (261) containing security, encryption and conformity rules that are specific to an application,
• a service request processing unit, (27), configured to receive a service request Rq originating from a user terminal or from a server comprising a database (271) and to verify said request before its transmission to the hub manager (24).

10. The device according to claim 9, **characterized in that** it comprises a module (26) for encrypting and monitoring the conformity of the CAC demands.
